(19) **Europäisches Patentamt / European Patent Office / Office européen des brevets**

(11) **EP 3 692 748 B1**

(12) # FASCICULE DE BREVET EUROPEEN

(45) Date de publication et mention de la délivrance du brevet:
**12.04.2023 Bulletin 2023/15**

(21) Numéro de dépôt: **18778933.4**

(22) Date de dépôt: **03.10.2018**

(51) Classification Internationale des Brevets (IPC):
*H04W 52/02* (2009.01)   *H04W 84/18* (2009.01)
*H04L 12/28* (2006.01)

(52) Classification Coopérative des Brevets (CPC):
**H04W 52/0216; H04W 52/0229;** Y02D 30/70

(86) Numéro de dépôt international:
**PCT/EP2018/076891**

(87) Numéro de publication internationale:
**WO 2019/068749 (11.04.2019 Gazette 2019/15)**

(54) **PROCÉDÉ DE GESTION DE L'ÉNERGIE CONSOMMÉE PAR UN MODULE RADIO**

VERFAHREN ZUR VERWALTUNG DER VON EINEM FUNKMODUL VERBRAUCHTEN ENERGIE

METHOD FOR MANAGING ENERGY CONSUMED BY A RADIO MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2017 FR 1759300**

(43) Date de publication de la demande:
**12.08.2020 Bulletin 2020/33**

(73) Titulaire: **Delta Dore**
**35270 Bonnemain (FR)**

(72) Inventeurs:
• **BRIOLLE DIT BRIONNE, Philippe**
**35270 Bonnemain (FR)**

• **LEDUC, Benoît**
**35270 Bonnemain (FR)**
• **LE FERRAND, Vincent**
**35270 Bonnemain (FR)**
• **PERRAUD, Xavier**
**35270 Bonnemain (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2009 122 735    US-A1- 2012 281 566**
**US-A1- 2016 353 376**

**Description**

La présente invention concerne un procédé et un système de gestion de l'énergie consommée par un module radio compris dans un périphérique.

Les documents US 2016/0353376 A1 et US 2009/0122735 A1 sont des exemples d'art antérieur dans le domaine de la demande.

Dans les systèmes d'alarme anti intrusion, de domotique ou de gestion de la température dans un bâtiment, certains périphériques tels que des capteurs, des transmetteurs, des sirènes, des thermostats d'ambiance, ont leur alimentation électrique assurée par des piles ou des batteries qui ont une capacité limitée à fournir de l'énergie électrique. Ces périphériques utilisent le médium radio comme moyen de communication avec un dispositif centralisé. La consommation d'un module radio en énergie électrique pour l'échange de messages radio est non négligeable. Cette consommation pénalise la durée de vie des piles ou des batteries des dispositifs et nécessite des changements de piles ou des recharges de batteries fréquents.

La fréquence de remplacement des piles ou des recharges gène les résidents du bâtiment.

La présente invention a pour but de résoudre les inconvénients de l'art antérieur en proposant un procédé et un système de gestion de l'énergie consommée par un module radio d'un périphérique de manière à accroître la longévité des éléments de fourniture en énergie électrique du périphérique.

A cette fin, selon un premier aspect, l'invention propose un procédé de gestion de l'énergie consommée par un module radio compris dans un périphérique, selon la revendication 1.

La présente invention concerne aussi un système de gestion de l'énergie consommée par un module radio compris dans un périphérique, selon la revendication 4.

Ainsi, l'énergie consommée par un module radio d'un périphérique est réduite de manière à accroître la longévité des éléments de fourniture en énergie électrique du périphérique.

Ainsi, en espaçant les réveils, ce mode de fonctionnement permet de diminuer la consommation du module radio compris dans le périphérique. Ainsi la consommation du périphérique due aux réveils infructueux diminue de manière inversement proportionnelle au multiple de la première durée.

Selon un mode particulier de l'invention, l'alimentation électrique du module radio pour la réception d'au moins un paquet de données si une détection d'une partie du préambule est effectuée est maintenue pendant un temps nécessaire à l'envoi d'une de trame de données au dispositif centralisé.

Ainsi, le temps nécessaire à resynchroniser le périphérique et le dispositif centralisé est optimisé.

Selon un mode particulier de l'invention, le préambule est constitué d'une séquence d'au moins un mot binaire dupliquée une pluralité de fois pendant la durée du préambule.

Ainsi, la durée de détection du préambule est optimisée. La répétition du mot binaire permet de décorréler le préambule d'une séquence purement aléatoire.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un système dans lequel la présente invention est implémentée ;
la Fig. 2 représente un exemple d'architecture d'un périphérique selon la présente invention ;
les Figs. 3a et 3b représentent un exemple d'algorithme exécuté par un périphérique selon la présente invention ;
la Fig. 4 représente un chronogramme montrant les différentes activations d'un module radio selon la présente invention ;
la Fig. 5 représente un exemple d'architecture d'un dispositif centralisé selon la présente invention ;
la Fig. 6 représente un exemple d'algorithme exécuté par le dispositif centralisé selon la présente invention.

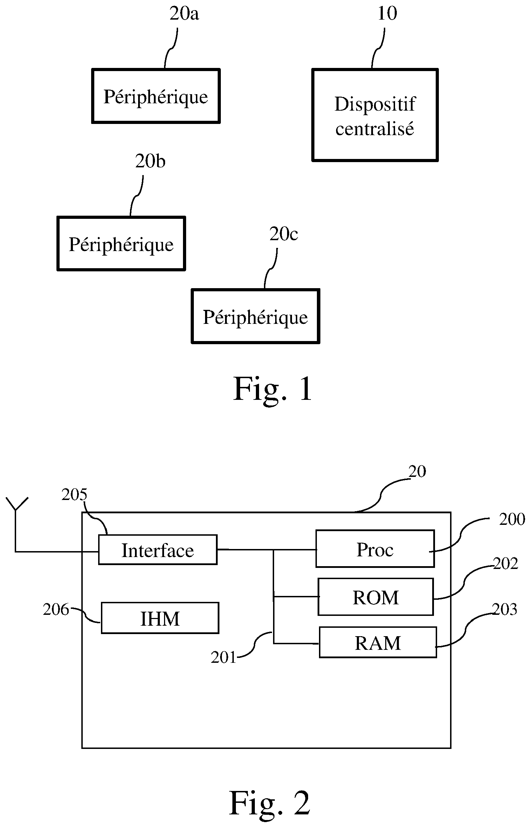

La **Fig. 1** représente un système dans lequel la présente invention est implémentée.

Le système comporte une pluralité de périphériques 20a, à 20c et un dispositif centralisé 10.

Le dispositif centralisé 10 est par exemple une centrale d'alarme ou une centrale domotique ou une centrale de régulation de la température d'un bâtiment.

Les périphériques sont par exemple des détecteurs d'ouvertures ou périmétriques, des détecteurs de mouvements, des claviers, des écrans, un thermostat, des capteurs de température, de luminosité...

Les périphériques sont des dispositifs fonctionnant sur batterie et il convient de réduire leur consommation électrique pour garantir une grande longévité de la batterie.

Dans la Fig. 1, trois périphériques sont représentés. Le système peut comporter un nombre réduit ou plus important de périphériques.

Selon la présente invention, le périphérique :

- détecte la mise du périphérique dans un mode dit d'association,
- alimente en énergie électrique au moins tout ou partie des composants actifs de la chaîne de réception du module radio avec une périodicité égale à une première durée pendant une seconde durée prédéterminée,

- maintient l'alimentation électrique du module radio pour la réception d'au moins un paquet de données si une détection d'une partie du préambule est réalisée pendant la seconde durée prédéterminée et interrompt l'alimentation en énergie électrique d'au moins tout ou partie des composants actifs de la chaîne de réception du module radio avec une périodicité égale à un multiple supérieur ou égal à deux de la première durée,

- interrompt l'alimentation électrique du module radio pour la réception d'au moins un paquet de données si une non détection d'une partie du préambule n'est pas réalisée pendant la seconde durée prédéterminée avec une périodicité égale à la première durée.

La **Fig. 2** représente un exemple d'architecture d'un périphérique selon la présente invention.

Le périphérique 20 selon la présente invention comprend :

- un processeur, micro-processeur, ou microcontrôleur 200 ;
- une mémoire volatile 203 ;
- une mémoire non volatile 202;
- un module radio 205 bidirectionnel ;
- une interface homme machine 206 ;
- un bus de communication 201 reliant le processeur 200 à la mémoire ROM 202, à la mémoire RAM 203 et au module radio 205.

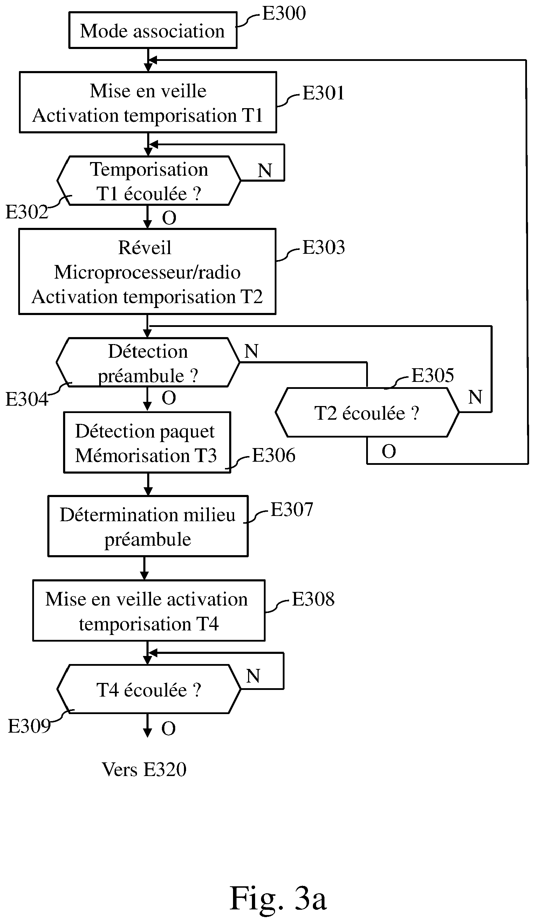

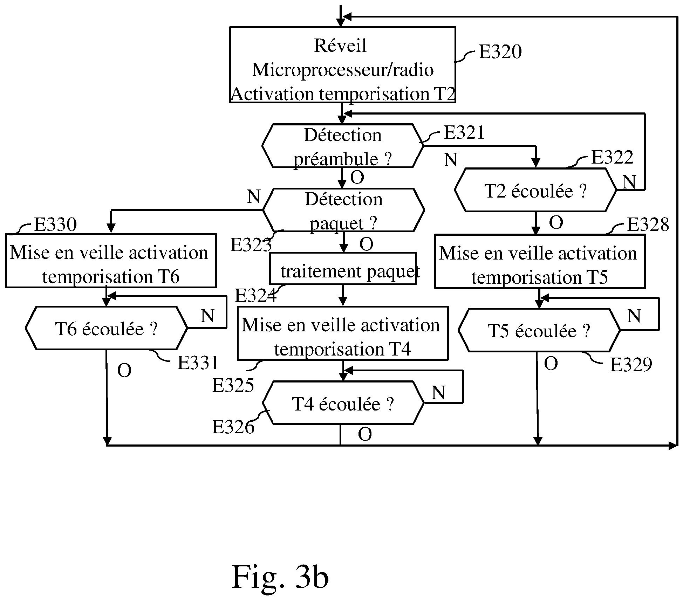

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le périphérique 20 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec les Figs. 3a et 3b.

Tout ou partie du procédé décrit en relation avec les Figs. 3a et 3b peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Les Figs. **3a et 3b** représentent un exemple d'algorithme exécuté par chaque périphérique selon la présente invention.

Plus précisément, le présent algorithme est décrit dans un exemple dans lequel il est exécuté par le processeur 200 du périphérique 20.

A l'étape E300, le processeur 200 détecte la mise du périphérique 20 dans un mode dit d'association. Dans un mode d'association, le périphérique 20 est dans une configuration dans laquelle celui-ci est en attente d'une trame de configuration de la part du dispositif centralisé 10. Sur réception de cette trame de configuration, le périphérique 20 se déclare par une trame de réponse auprès du dispositif centralisé 10.

La mise du périphérique 20 dans le mode association est détecté par l'interface homme machine 206 du périphérique 20. L'interface homme machine 206 est par exemple constituée d'au moins un interrupteur qui est actionné par l'installateur ou l'utilisateur du système.

A l'étape E301, le processeur 200 commande la mise en veille du module radio du périphérique 20 et active une temporisation notée T1 = 250ms.

La mise en veille consiste à désactiver le fonctionnement du module radio 205 de manière à mettre le périphérique dans un mode d'économie d'énergie. Par exemple, au moins la chaîne dédiée à la réception de messages est mise dans un mode de veille en interrompant l'alimentation électrique de tout ou partie des composants actifs de la chaîne de réception du module radio 205. La mise en veille peut consister aussi à mettre en veille la chaîne d'émission du module radio 205.

A l'étape E302, le processeur 200 vérifie si la temporisation T1 est écoulée. Dans l'affirmative le processeur 200 passe à l'étape E303. Dans la négative, le processeur 200 retourne à l'étape E302.

A l'étape E303, le processeur 200 commande le réveil du module radio 205. Le réveil de l'interface réseau 206 consiste à alimenter en énergie électrique au moins tout ou partie des composants actifs de la chaîne de réception du module radio 205 voire tout ou partie des composants actifs de la chaîne d'émission du module radio 205. A cette même étape, le processeur 200 déclenche une temporisation T2. Par exemple, la temporisation T2 est égale au moins au temps nécessaire à la réception de trois octets. T2 est, si par exemple la durée de transmission d'un octet est de 200µs, égale à 600µs.

A l'étape suivante E304, le processeur 200 vérifie si un préambule de trame est détecté.

Par exemple, un préambule de trame est constitué d'une suite de 635 mots de 16 bits prédéterminés et identiques.

Par exemple, un préambule est détecté lorsque deux mots de 16 bits consécutifs et prédéterminés sont détectés.

Si un préambule de trame est détecté, le processeur 200 mémorise l'instant de la détection du préambule et passe à l'étape E306. Dans la négative le processeur 200 passe à l'étape E305.

A l'étape E305, le processeur 200 vérifie si la temporisation T2 est écoulée. Dans l'affirmative le processeur 200 retourne à l'étape E301. Dans la négative, le processeur 200 retourne à l'étape E304.

A l'étape E306, le processeur 200 détecte la réception d'un paquet à la suite du préambule. Par exemple, un préambule est suivi de trois paquets identiques. Le premier paquet est espacé de la fin du préambule d'une durée notée Tg = 10ms, les second et troisième paquets sont espacés du précédent paquet de la durée Tg. Par exemple chaque paquet à une durée Tf de 10 ms. A la détection d'un paquet, le processeur 200 mémorise l'instant T3 de la détection du paquet.

A l'étape E307, le processeur 200 détermine l'instant correspondant à la moitié du préambule.

Par exemple, le processeur 200 calcule la durée Tfirst selon la formule suivante :

$$Tfirst= T1-Tp/2-k(Tg +Tf)$$

où Tp est la durée du préambule et k est égal à l'indice du premier paquet détecté suivant le préambule.

L'instant Tmid correspondant à la moitié du préambule est égal à T3+Tfirst- T1.

A l'étape E308, le processeur 200 commande la mise en veille du module radio du périphérique 20 et active une temporisation T4 égale à Tmid+N*T1-Tp/2 - k(Tg + Tf) où N est un entier supérieur ou égal à 2.

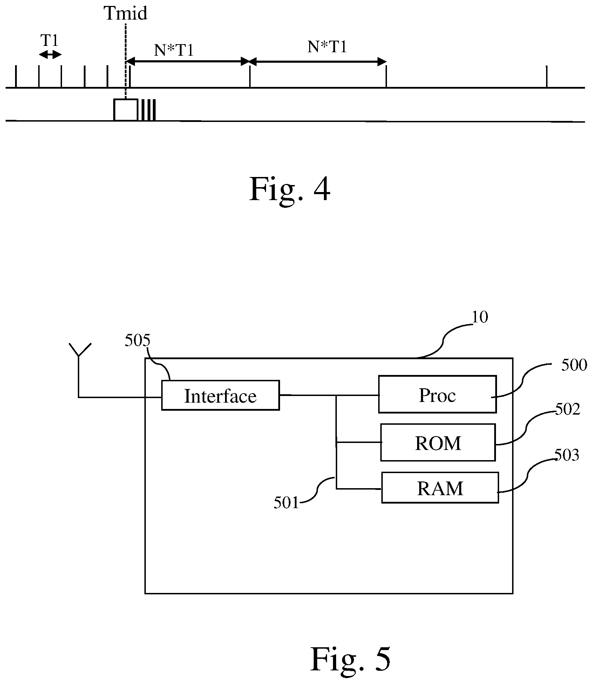

A cette étape, le périphérique 20 est associé au dispositif centralisé 20. La périodicité du réveil de module radio est augmentée pour être égale à N fois la durée T1 et l'instant de réveil du module radio correspond au milieu Tmid du préambule comme cela est décrit en référence à la Fig. 4.

La Fig. 4 représente un chronogramme montrant les différentes activations d'un module radio selon la présente invention.

Pendant l'association, la périodicité du réveil de module radio est égale à T1.

Lorsque le périphérique 20 est associé au dispositif centralisé 20, la périodicité du réveil de module radio est égale à N fois la durée T1 et l'instant de réveil du module radio correspond au milieu Tmid du préambule.

A l'étape E309, le processeur 200 vérifie si la temporisation T4 est écoulée. Dans l'affirmative le processeur 200 passe à l'étape E320 de la Fig. 3b. Dans la négative, le processeur 200 retourne à l'étape E309.

A l'étape E320, le processeur 200 commande le réveil du module radio 205. A cette même étape, le processeur 200 déclenche la temporisation T2.

A l'étape suivante E321, le processeur 200 vérifie si un préambule de trame est détecté.

Par exemple, un préambule de trame est constitué d'une suite de 635 mots de 16 bits prédéterminés et identiques.

Si un préambule de trame est détecté, le processeur 200 mémorise l'instant de la détection du préambule et passe à l'étape E323. Dans la négative, le processeur 200 passe à l'étape E322.

A l'étape E322, le processeur 200 vérifie si la temporisation T2 est écoulée. Dans l'affirmative le processeur 200 passe à l'étape E328. Dans la négative, le processeur 200 retourne à l'étape E321.

A l'étape E328, le processeur 200 commande la mise en veille du module radio du périphérique 20 et active une temporisation T5 égale à N*T1-T2.

A l'étape E329, le processeur 200 vérifie si la temporisation T5 est écoulée. Dans l'affirmative le processeur 200 retourne à l'étape E320. Dans la négative, le processeur 200 retourne à l'étape E329.

A l'étape E323, le processeur 200 vérifie si un paquet est détecté à la suite du préambule. Par exemple, le préambule est suivi de trois paquets identiques. Le premier paquet est espacé de la fin du préambule d'une durée notée Tg = 10ms, les second et troisième paquets sont espacés du précédent paquet de la durée Tg. Par exemple, chaque paquet a une durée Tf de 10 ms. A la détection d'un paquet, le processeur 200 mémorise l'instant T3 de la détection du paquet et passe à l'étape E324.

Si un paquet n'est pas détecté pendant une durée égale à 3*(Tg+Tf), le processeur 200 passe à l'étape E330.

A l'étape E330, le processeur 200 commande la mise en veille du module radio du périphérique 20 et active une temporisation T6 égale à N*T1-T2- 3*(Tg+Tf).

A l'étape E331, le processeur 200 vérifie si la temporisation T6 est écoulée. Dans l'affirmative, le processeur 200 retourne à l'étape E320. Dans la négative, le processeur 200 retourne à l'étape E331.

A l'étape E324, le processeur 200 traite le paquet reçu et commande l'émission d'une trame de données en réponse au paquet reçu si besoin.

A l'étape E325, le processeur 200 commande la mise en veille du module radio du périphérique 20 et active la temporisation T4 égale à Tmid+N*T1 où N est un entier supérieur ou égal à 2.

Pour cela, le processeur 200 détermine l'instant correspondant à la moitié du préambule.

Par exemple, le processeur 200 calcule la durée Tfirst selon la formule suivante :

$$Tfirst= T1-Tp/2-k(Tg +Tf)$$

où Tp est la durée du préambule et k est égal à l'indice du premier paquet détecté suivant le préambule.

L'instant Tmid correspondant à la moitié du préambule est égal à T3+Tfirst- T1.

A l'étape E326, le processeur 200 vérifie si la temporisation T4 est écoulée. Dans l'affirmative, le processeur 200 retourne à l'étape E320. Dans la négative, le processeur 200 retourne à l'étape E326.

La Fig. 5 représente un exemple d'architecture d'un dispositif centralisé selon la présente invention.

Le dispositif centralisé 10 selon la présente invention comprend :

- un processeur, micro-processeur, ou microcontrôleur 500 ;
- une mémoire volatile 503 ;
- une mémoire non volatile 502 ;
- un module radio 505 bidirectionnel ;
- éventuellement une interface homme machine 506 ;
- un bus de communication 501 reliant le processeur 500 à la mémoire ROM 203, à la mémoire RAM 203 et au module radio 505.

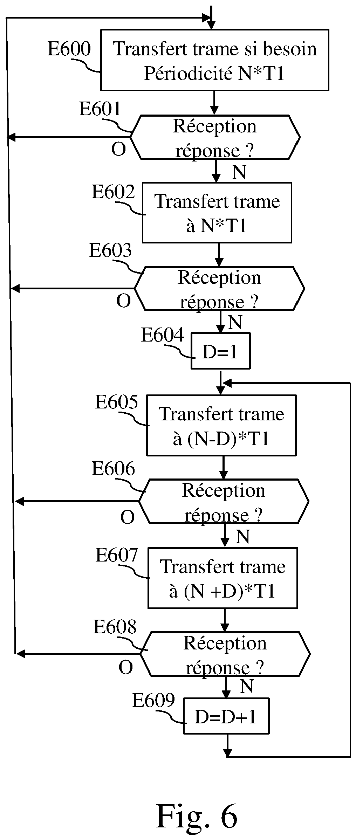

Le processeur 500 est capable d'exécuter des instructions chargées dans la mémoire volatile 503 à partir de la mémoire non volatile 502, d'une mémoire externe (non représentée), d'un support de stockage, tel qu'une carte SD ou autre, ou d'un réseau de communication. Lorsque le dispositif centralisé est mis sous tension, le processeur 500 est capable de lire de la mémoire volatile 503 des instructions et de les exécuter. Ces instructions forment un programme d'ordinateur qui cause la mise en oeuvre, par le processeur 500, de tout ou partie du procédé décrit en relation avec la Fig. 6.

Tout ou partie du procédé décrit en relation avec la Fig. 6 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 6** représente un exemple d'algorithme exécuté par le dispositif centralisé selon la présente invention.

Plus précisément, le présent algorithme est décrit dans un exemple dans lequel il est exécuté par le processeur 500 du dispositif centralisé 10.

A l'étape E600, le processeur 500 commande l'interface radio 205 pour le transfert, si besoin, d'une trame de données à destination d'un périphérique 20.

Si une trame de données doit être transmise, le processeur 500 commande le transfert de la trame à destination du périphérique 20 à un instant séparé du précédent envoi d'une trame au périphérique d'une durée multiple de N*T1.

A l'étape E601, le processeur 500 vérifie si une trame de données est reçue en réponse à la trame transférée à l'étape E600. Dans l'affirmative, le processeur 500 retourne à l'étape E600. Dans la négative, le processeur 500 passe à l'étape E601.

A l'étape E602, le processeur 500 commande l'interface radio 205 pour le transfert d'une nouvelle trame de données à destination d'un périphérique 20 à un instant séparé du précédent envoi d'une durée de N*T1.

A l'étape E603, le processeur 500 vérifie si une trame de données est reçue en réponse à la trame transférée à l'étape E602. Dans l'affirmative, le processeur 500 retourne à l'étape E600. Dans la négative, le processeur 500 passe à l'étape E604.

A l'étape E604, le processeur 500 met une variable notée D à la valeur 1.

A l'étape E605, le processeur 500 commande l'interface radio 205 pour le transfert d'une nouvelle trame de données à destination d'un périphérique 20 à un instant séparé du précédent envoi d'une durée de (N-D)*T1.

A l'étape E606, le processeur 500 vérifie si une trame de données est reçue en réponse à la trame transférée à l'étape E605. Dans l'affirmative, le processeur 500 retourne à l'étape E600. Dans la négative, le processeur 500 passe à l'étape E607.

A l'étape E607, le processeur 500 commande l'interface radio 205 pour le transfert d'une nouvelle trame de données à destination d'un périphérique 20 à un instant séparé du précédent envoi d'une durée de (N+D)*T1.

A l'étape E608, le processeur 600 vérifie si une trame de données est reçue en réponse à la trame transférée à l'étape E607. Dans l'affirmative, le processeur 500 retourne à l'étape E600. Dans la négative, le processeur 500 passe à l'étape E609.

A l'étape E609, le processeur 500 incrémente la variable D d'une unité et retourne à l'étape E605.

Bien entendu, la présente invention n'est nullement limitée aux modes de réalisation décrits ici, mais englobe, bien au contraire, toute variante à la portée de l'homme du métier.

**Revendications**

1. Procédé de gestion de l'énergie consommée par un module radio compris dans un périphérique, le périphérique étant destiné à être associé à un dispositif centralisé et à recevoir des trames de données du dispositif centralisé, les trames de données étant constituées d'un préambule et d'au moins un paquet de données, **caractérisé en ce que** le procédé comporte les étapes de :

   - mise, par le périphérique, du périphérique (E300) dans un mode dit d'association où le périphérique est dans une configuration dans laquelle celui-ci est en attente d'une trame de configuration de la part du dispositif centralisé,
   - alimentation, par le périphérique, (E303) en énergie électrique d'au moins tout ou partie des composants actifs de la chaîne de réception du module radio avec une périodicité égale à une première durée, pendant une seconde durée prédéterminée,
   - maintien, par le périphérique, (E304) de l'alimentation électrique du module radio pour la réception d'au moins un paquet de données si une partie du préambule est détectée pendant la seconde durée prédéterminée, et interruption (E308) de l'alimentation en énergie électrique d'au moins tout ou partie des composants actifs de la chaîne de réception du module radio avec une périodicité égale à un multiple supérieur ou égal à deux de la première durée si une partie du préambule n'est pas détectée pendant la seconde durée prédéterminée,

- maintien, par le périphérique, pendant une durée d'envoi d'une de trame de données au dispositif centralisé, de l'alimentation électrique du module radio si une détection d'une partie du préambule est effectuée,

- interruption, par le périphérique, (E301) de l'alimentation électrique du module radio pour la réception d'au moins un paquet de données si une partie du préambule n'est pas détecté pendant la seconde durée prédéterminée avec une périodicité égale à la première durée, et l'instant de démarrage, où l'interruption (E308) de l'alimentation électrique du module radio pour la réception d'au moins un paquet de données avec la périodicité égale à un multiple supérieur ou égal à deux de la première durée est effectuée, a lieu à partir d'une détermination du milieu de la durée du préambule,

- incrémentation ou décrémentation, par le dispositif centralisé de la valeur du multiple de la première durée si deux trames de données consécutives ne sont pas reçues du périphérique par le dispositif centralisé en réponse à deux trames de données consécutives émises par le dispositif centralisé.

2. Procédé selon la revendication 1, **caractérisé en ce que** le procédé comporte en outre l'étape de maintien, pendant une durée d'envoi d'une de trame de données au dispositif centralisé, de l'alimentation électrique du module radio si une détection d'une partie du préambule est effectuée.

3. Procédé selon l'une quelconque des revendications 1 à 2, **caractérisé en ce que** le préambule est constituée d'une séquence d'au moins un mot binaire dupliquée une pluralité de fois pendant la durée du préambule.

4. Système de gestion de l'énergie consommée par un module radio compris dans un périphérique, le périphérique étant destiné à être associé à un dispositif centralisé et à recevoir des trames de données du dispositif centralisé, les trames de données étant constituées d'un préambule et d'au moins un paquet de données, **caractérisé en ce que** système comporte :

- des moyens de détection (200), compris dans le périphérique, de la mise du périphérique dans un mode dit d'association où le périphérique est dans une configuration dans laquelle celui-ci est en attente d'une trame de configuration de la part du dispositif centralisé,

- des moyens d'alimentation (200), compris dans le périphérique, en énergie électrique d'au moins tout ou partie des composants actifs de la chaîne de réception du module radio avec une périodicité égale à une première durée, pendant une seconde durée prédéterminée,

- des moyens de maintien (200), compris dans le périphérique, de l'alimentation électrique du module radio pour la réception d'au moins un paquet de données si une partie du préambule est détectée pendant la seconde durée prédéterminée et d'interruption de l'alimentation en énergie électrique d'au moins tout ou partie des composants actifs de la chaîne de réception du module radio avec une périodicité égale à un multiple supérieur ou égal à deux de la première durée si une partie du préambule n'est pas détectée pendant la seconde durée prédéterminée,

- des moyens de maintien (200), compris dans le périphérique, pendant une durée d'envoi d'une de trame de données au dispositif centralisé, de l'alimentation électrique du module radio si une détection d'une partie du préambule est effectuée,

- des moyens d'interruption (200), compris dans le périphérique, de l'alimentation électrique du module radio pour la réception d'au moins un paquet de données si une partie du préambule n'est pas détectée pendant la seconde durée prédéterminée avec une périodicité égale à la première durée,

- des moyens de détermination (200), compris dans le périphérique, du milieu de la durée du préambule et **en ce que** l'instant de démarrage, où l'interruption de l'alimentation électrique du module radio pour la réception d'au moins un paquet de données avec la périodicité égale à un multiple supérieur ou égal à deux de la première durée est effectuée, a lieu à partir d'une détermination du milieu de la durée du préambule

- des moyens d'incrémentation et/ou décrémentation (500), compris dans le dispositif centralisé de la valeur du multiple de la première durée si deux trames de données consécutives ne sont pas reçues du périphérique par le dispositif centralisé en réponse à deux trames de données consécutives émises par le dispositif centralisé.

5. Système selon la revendication 4, **caractérisé en ce que** l'alimentation électrique du module radio pour la réception d'au moins un paquet de données,

si une détection d'une partie du préambule est effectuée, est maintenue pendant une durée d'envoi d'une trame de données au dispositif centralisé.

6. Système selon l'une quelconque des revendications 4 à 5, **caractérisé en ce que** le préambule est constitué d'une séquence d'au moins un mot binaire dupliquée une pluralité de fois pendant la durée du préambule.

**Patentansprüche**

1. Verfahren zur Verwaltung der von einem in einem Peripheriegerät enthaltenen Funkmodul verbrauchten Energie, wobei das Peripheriegerät dazu bestimmt ist, einer zentralen Vorrichtung zugeordnet zu sein und Datenrahmen von der zentralen Vorrichtung zu empfangen, wobei die Datenrahmen aus einer Präambel und mindestens einem Datenpaket bestehen, **dadurch gekennzeichnet, dass** das Verfahren die folgenden Schritte aufweist:

- Versetzen (E300), durch das Peripheriegerät, des Peripheriegeräts in einen so genannten Zuordnungsmodus, in dem das Peripheriegerät in einer Konfiguration ist, in der dieses auf einen Konfigurationsrahmen von der zentralen Vorrichtung wartet,
- Versorgung (E303), durch das Peripheriegerät, zumindest aller oder eines Teils der aktiven Komponenten der Empfangskette des Funkmoduls mit elektrischer Energie mit einer Periodizität gleich einer ersten Dauer während einer zweiten vorbestimmten Dauer,
- Aufrechterhaltung (E304), durch das Peripheriegerät, der Elektrizitätsversorgung des Funkmoduls für den Empfang mindestens eines Datenpakets, wenn ein Teil der Präambel während der zweiten vorbestimmten Dauer erkannt wird, und Unterbrechung (E308) der Versorgung mit elektrischer Energie mindestens aller oder eines Teils der aktiven Komponenten der Empfangskette des Funkmoduls mit einer Periodizität gleich einem Vielfachen größer als oder gleich zwei der ersten Dauer, wenn ein Teil der Präambel nicht während der zweiten vorbestimmten Dauer erkannt wird,
- Aufrechterhaltung, durch das Peripheriegerät, der Elektrizitätsversorgung des Funkmoduls während einer Sendedauer eines Datenrahmens an die zentrale Vorrichtung, wenn eine Erkennung eines Teils der Präambel ausgeführt wird,
- Unterbrechung (E301), durch das Peripheriegerät, der Elektrizitätsversorgung des Funkmoduls für den Empfang mindestens eines Datenpakets, wenn ein Teil der Präambel nicht während der zweiten vorbestimmten Dauer mit einer Periodizität gleich der ersten Dauer erkannt wird, und der Startzeitpunkt, in dem die Unterbrechung (E308) der Elektrizitätsversorgung des Funkmoduls für den Empfang mindestens eines Datenpakets mit der Periodizität gleich einem Vielfachen größer als oder gleich zwei der ersten Dauer ausgeführt wird, ausgehend von einer Bestimmung der Mitte der Dauer der Präambel stattfindet,
- Inkrementierung oder Dekrementierung, durch die zentrale Vorrichtung, des Werts des Vielfachen der ersten Dauer, wenn zwei aufeinanderfolgende Datenrahmen nicht vom Peripheriegerät durch die zentrale Vorrichtung als Antwort auf zwei aufeinanderfolgende Datenrahmen empfangen werden, die von der zentralen Vorrichtung gesendet werden.

2. Verfahren nach Anspruch 1, **dadurch gekennzeichnet, dass** das Verfahren außerdem den Schritt der Aufrechterhaltung, während einer Sendedauer eines Datenrahmens an die zentrale Vorrichtung, der Elektrizitätsversorgung des Funkmoduls aufweist, wenn eine Erkennung eines Teils der Präambel ausgeführt wird.

3. Verfahren nach einem der Ansprüche 1 bis 2, **dadurch gekennzeichnet, dass** die Präambel aus einer während der Dauer der Präambel mehrere Male duplizierten Folge mindestens eines Binärworts besteht.

4. Verwaltungssystem der von einem in einem Peripheriegerät enthaltenen Funkmodul verbrauchten Energie, wobei das Peripheriegerät dazu bestimmt ist, einer zentralen Vorrichtung zugeordnet zu sein und Datenrahmen von der zentralen Vorrichtung zu empfangen, wobei die Datenrahmen aus einer Präambel und mindestens einem Datenpaket bestehen, **dadurch gekennzeichnet, dass** das System aufweist:

- im Peripheriegerät enthaltene Einrichtungen (200) zur Erkennung des Versetzens des Peripheriegeräts in einen so genannten Zuordnungsmodus, in dem das Peripheriegerät in einer Konfiguration ist, in der dieses auf einen Konfigurationsrahmen von der zentralen Vorrichtung wartet,
- im Peripheriegerät enthaltene Einrichtungen (200) zur Versorgung zumindest aller oder eines Teils der aktiven Komponenten der Empfangskette des Funkmoduls mit elektrischer Energie mit einer Periodizität gleich einer ersten Dauer während einer zweiten vorbestimmten Dauer,
- im Peripheriegerät enthaltene Einrichtungen (200) zur Aufrechterhaltung der Elektrizitätsversorgung des Funkmoduls für den Empfang mindestens eines Datenpakets, wenn ein Teil der Präambel während der zweiten vorbestimmten Dauer erkannt wird, und der Unterbrechung der Elektrizitätsversorgung mindestens aller oder eines Teils der aktiven Komponenten der Empfangskette des Funkmoduls mit einer Periodizität gleich einem Vielfachen größer als oder gleich zwei der ersten Dauer, wenn ein Teil der Präambel nicht während der zweiten vorbestimmten Dauer erkannt wird,

- im Peripheriegerät enthaltene Einrichtungen (200) zur Aufrechterhaltung der Elektrizitätsversorgung des Funkmoduls während einer Sendedauer eines Datenrahmens an die zentrale Vorrichtung, wenn eine Erkennung eines Teils der Präambel ausgeführt wird,

- im Peripheriegerät enthaltene Einrichtungen (200) zur Unterbrechung der Elektrizitätsversorgung des Funkmoduls für den Empfang mindestens eines Datenpakets, wenn ein Teil der Präambel nicht während der zweiten vorbestimmten Dauer mit einer Periodizität gleich der ersten Dauer erkannt wird,

- im Peripheriegerät enthaltene Einrichtungen (200) zur Bestimmung der Mitte der Dauer der Präambel, und dass der Startzeitpunkt, in dem die Unterbrechung der Elektrizitätsversorgung des Funkmoduls für den Empfang mindestens eines Datenpakets mit der Periodizität gleich einem Vielfachen größer als oder gleich zwei der ersten Dauer ausgeführt wird, ausgehend von einer Bestimmung der Mitte der Dauer der Präambel stattfindet,

- in der zentralen Vorrichtung enthaltene Einrichtungen (500) zur Inkrementierung und/oder Dekrementierung des Werts des Vielfachen der ersten Dauer, wenn zwei aufeinanderfolgende Datenrahmen nicht vom Peripheriegerät durch die zentrale Vorrichtung als Antwort auf zwei von der zentralen Vorrichtung gesendete aufeinanderfolgende Datenrahmen empfangen werden.

**5.** System nach Anspruch 4, **dadurch gekennzeichnet, dass** die Elektrizitätsversorgung des Funkmoduls für den Empfang mindestens eines Datenpakets, wenn eine Erkennung eines Teils der Präambel ausgeführt wird, während einer Sendedauer eines Datenrahmens an die zentrale Vorrichtung aufrechterhalten wird.

**6.** System nach einem der Ansprüche 4 bis 5, **dadurch gekennzeichnet, dass** die Präambel aus einer während der Dauer der Präambel mehrere Male duplizierten Folge mindestens eines Binärworts besteht.

## Claims

**1.** Method for managing the energy consumed by a radio module contained in a peripheral, the peripheral being intended to be associated with a centralized device and to receive data frames from the centralized device, the data frames being composed of a preamble and of at least one data packet, **characterized in that** the method comprises the steps of:

- the peripheral placing (E300) the peripheral in a so-called association mode where the peripheral is in a configuration in which it is awaiting a configuration frame from the centralized device,
- the peripheral supplying (E303) electrical energy to at least all or some of the active components of the receiving chain of the radio module with a periodicity which is equal to a first duration, for a predetermined second duration,
- the peripheral maintaining (E304) the electric power supply to the radio module for receiving at least one data packet if part of the preamble is detected over the predetermined second duration, and interrupting (E308) the electrical energy supply to at least all or some of the active components of the radio module with a periodicity which is equal to a multiple, which is greater than or equal to two, of the first duration if part of the preamble is not detected over the predetermined second duration,
- the peripheral maintaining, for the duration of sending a data frame to the centralized device, the electric power supply to the radio module if part of the preamble is detected,
- the peripheral interrupting (E301) the electric power supply to the radio module for receiving at least one data packet if part of the preamble is not detected over the predetermined second duration with a periodicity which is equal to the first duration, and the start-up instant, when the electric power supply to the radio module for receiving at least one data packet with a periodicity which is equal to a multiple, which is greater than or equal to two, of the first duration is interrupted (E308), takes place on the basis of the determination of the middle of the duration of the preamble,
- the centralized device incrementing or decrementing the value of the multiple of the first duration if two consecutive data frames are not received from the peripheral by the centralized device in response to two consecutive data frames transmitted by the centralized device.

**2.** Method according to Claim 1, **characterized in that** the method further comprises the step of maintaining, for the duration of sending a data frame to the centralized device, the electric power supply to the radio module if part of the preamble is detected.

3. Method according to either one of Claims 1 and 2, **characterized in that** the preamble is composed of a sequence of at least one binary word, which sequence is duplicated a plurality of times over the duration of the preamble.

4. System for managing the energy consumed by a radio module contained in a peripheral, the peripheral being intended to be associated with a centralized device and to receive data frames from the centralized device, the data frames being composed of a preamble and of at least one data packet, **characterized in that** the system comprises:

- means (200), contained in the peripheral, for detecting the peripheral being placed in a so-called association mode where the peripheral is in a configuration in which it is awaiting a configuration frame from the centralized device,
- means (200), contained in the peripheral, for supplying electrical energy to at least all or some of the active components of the receiving chain of the radio module with a periodicity which is equal to a first duration, for a predetermined second duration,
- means (200), contained in the peripheral, for maintaining the electric power supply to the radio module for receiving at least one data packet if part of the preamble is detected over the predetermined second duration and for interrupting the electrical energy supply to at least all or some of the active components of the receiving chain of the radio module with a periodicity which is equal to a multiple, which is greater than or equal to two, of the first duration if part of the preamble is not detected over the predetermined second duration,
- means (200), contained in the peripheral, for maintaining, for the duration of sending a data frame to the centralized device, the electric power supply to the radio module if part of the preamble is detected,
- means (200), contained in the peripheral, for interrupting the electric power supply to the radio module for receiving at least one data packet if part of the preamble is not detected over the predetermined second duration with a periodicity which is equal to the first duration,
- means (200), contained in the peripheral, for determining the middle of the duration of the preamble and **in that** the start-up instant, when the electric power supply to the radio module for receiving at least one data packet with a periodicity which is equal to a multiple, which is greater than or equal to two, of the first duration is interrupted, takes place on the basis of the determination of the middle of the duration of the preamble,
- means (500), contained in the centralized device, for incrementing and/or decrementing the value of the multiple of the first duration if two consecutive data frames are not received from the peripheral by the centralized device in response to two consecutive data frames transmitted by the centralized device.

5. System according to Claim 4, **characterized in that** the electric power supply to the radio module for receiving at least one data packet, if part of the preamble is detected, is maintained for the duration of sending a data frame to the centralized device.

6. System according to either one of Claims 4 and 5, **characterized in that** the preamble is composed of a sequence of at least one binary word, which sequence is duplicated a plurality of times over the duration of the preamble.

20a

Périphérique

10

Dispositif
centralisé

20b

Périphérique

20c

Périphérique

## Fig. 1

20

205

Interface

Proc — 200

ROM — 202

RAM — 203

206 — IHM

201

## Fig. 2

Mode association — E300

Mise en veille
Activation temporisation T1 — E301

Temporisation
T1 écoulée ? — N

E302 — O

Réveil
Microprocesseur/radio
Activation temporisation T2 — E303

Détection
préambule ? — N

E304 — O

T2 écoulée ? — N — E305

Détection paquet
Mémorisation T3 — E306

O

Détermination milieu
préambule — E307

Mise en veille activation
temporisation T4 — E308

T4 écoulée ? — N

E309 — O

Vers E320

## Fig. 3a

Réveil
Microprocesseur/radio
Activation temporisation T2 ⌐E320

Détection
préambule ? ⌐E321
N

T2 écoulée ? ⌐E322
N

Détection
paquet ? O
N
E323

O

traitement paquet
E324

Mise en veille activation
temporisation T6 ⌐E330

Mise en veille activation
temporisation T4
E325

Mise en veille activation
temporisation T5 ⌐E328

T6 écoulée ? N

O ⌐E331

T4 écoulée ? N
E326

O

T5 écoulée ? N

O ⌐E329

# Fig. 3b

Tmid

T1

N*T1

N*T1

## Fig. 4

505

10

500

502

503

501

Interface

Proc

ROM

RAM

## Fig. 5

E600 — Transfert trame si besoin
Périodicité N*T1

E601 — Réception réponse ?
O
N

E602 — Transfert trame à N*T1

E603 — Réception réponse ?
O
N

E604 — D=1

E605 — Transfert trame à (N-D)*T1

E606 — Réception réponse ?
O
N

E607 — Transfert trame à (N +D)*T1

E608 — Réception réponse ?
O
N

E609 — D=D+1

## Fig. 6

**EP 3 692 748 B1**

## RÉFÉRENCES CITÉES DANS LA DESCRIPTION

**Documents brevets cités dans la description**

- US 20160353376 A1

- US 20090122735 A1